# EUROPÄISCHE PATENTSCHRIFT

(11) **EP 1 920 728 B1**
(45) Veröffentlichungstag und Bekanntmachung des Hinweises auf die Patenterteilung: **07.10.2015**
(21) Anmeldenummer: 07021529.8
(22) Anmeldetag: 06.11.2007
(51) Int. Cl.: A61C 3/00, A61C 3/16

(54) **Zahnmedizinisches Instrument zum Lösen einer lösbaren Prothese und Systeme zu dessen Anwendung**
Dental instrument for loosening a removably affixed prosthesis and system for its application
Instrument dentaire pour libérer une prothèse détachable et système d'utilisation

(30) Priorität: 09.11.2006 DE 202006017237 U
(43) Veröffentlichungstag der Anmeldung: 14.05.2008
(73) Patentinhaber: Johnki, Bernd J., 46325 Borken (DE)
(72) Erfinder: Johnki, Bernd J., 46325 Borken (DE)
(74) Vertreter: Weisbrodt, Bernd

(56) Entgegenhaltungen:
- DE-B- 1 027 362
- DE-U1-202004 020 264
- US-A1- 2005 096 694
- US-A1- 2006 020 287

## Beschreibung

Die vorliegende Erfindung betrifft ein medizinisches Instrument zum Lösen einer lösbar auf Zähnen, Zahnstümpfen und/oder Kieferimplantaten eines Ober-oder Unterkiefers angeordneten Prothese gemäß Anspruch 1.

Ferner betrifft die vorliegende Erfindung ein System bestehend aus einer lösbar auf Zähnen, Zahnstümpfen und/oder Kieferimplantaten eines Ober- oder Unterkiefers anordbaren Prothese und einem erfindungsgemäßen medizinisches Instrument.

Ein derartiges Instrument und System ist aus der DE 20 2004 020 264 U1 bekannt.

Im Stand der Technik sind zahlreiche medizinische Instrumente mit einem Schaft, an dessen proximalem Ende ein Griffstück und an dessen distalem Ende ein ein für zahnmedizinische Behandlungen ausgebildetes Werkzeug aufweisendes Kopfteil angeordnet ist, bekannt. Die Handhabung derartiger medizinischer Instrumente ist insgesamt verbesserbar, insbesondere im Hinblick auf eine kontrollierte und/oder dosierbare Krafteinleitung als auch eine kontrollierte Führung des medizinischen Instruments.

Darüber hinaus ist mit den bisher bekannten medizinischen Instrumenten ein Lösen von einer lösbar auf Zähnen, Zahnstümpfen und/oder Kieferimplantaten eines Ober- oder Unterkiefers angeordneten Prothese in der Regel nur von entsprechend ausgebildetem Fachkräften und/oder mit ausreichender Übung möglich. Aufgrund der konstruktiven Ausgestaltung der bisher bekannten medizinischen Instrumente sind dabei immer wieder, auch bei Anwendung durch Fachkräfte, Verletzungen des Zahnfleischs des Prothesenträgers gegeben. Ferner ist die Handhabung der bisher bekannten medizinischen Instrumente bei einer Anwendung bei hilfe- bzw. pflegebedürftigen, Prothesen tragenden Personen, beispielsweise bettlägerigen oder querschnittsgelähmten Personen, durch entsprechendes Hilfs- bzw. Pflegepersonal überaus unbequem und umständlich sowohl für die hilfe- bzw. pflegebedürftige, die Prothese tragende Person als auch die helfende bzw. pflegende Person. Darüber hinaus können die Prothesen, insbesondere Teil- und/oder Vollprothesen wie Brücken, Kronen oder dergleichen, beim insbesondere durch Abziehen von Zähnen, Zahnstümpfen und/oder Kieferimplantaten gegebenen Lösen durch die bisher bekannten medizinischen Instrumente beschädigt und/oder zerstört werden.

Vor diesem Hintergrund liegt der vorliegenden Erfindung die Aufgabe zugrunde, ein medizinisches Instrument, insbesondere ein medizinisches Instrument zum Lösen einer lösbar auf Zähnen, Zahnstümpfen und/oder Kieferimplantaten eines Ober- oder Unterkiefers angeordneten Prothese, der eingangs genannten Art zu verbessern, insbesondere im Hinblick auf eine kontrollierte und/oder dosierbare Krafteinleitung als auch eine kontrollierte Führung des medizinischen Instruments. Dabei soll es insbesondere einem Prothesenträger selbst als auch Fach-, Hilfs-und/oder Pflegepersonal auf einfache, bequeme und insbesondere zumindest weitestgehend verletzungsfreie Art und Weise ermöglicht werden, eine lösbar auf Zähnen, Zahnstümpfen und/oder Kieferimplantaten eines Ober- oder Unterkiefers angeordnete Prothese beschädigungsfrei zu lösen.

Gemäß der Erfindung erstreckt sich der Schaft in den in Längserstreckungsrichtung des Schaftes liegenden Abschnitt des Griffstücks.

Die Erfindung macht sich die Erkenntnis zu nutze, dass sich die Handhabung derartiger medizinischer Instrumente insbesondere im Hinblick auf eine kontrollierte und/oder dosierbare Krafteinleitung als auch eine kontrollierte Führung des medizinischen Instruments durch erfindungsgemäße gegeneinander elastisch verformbare Abschnitte seitens des Griffstücks verbessern lässt. Die elastische Verformbarkeit ermöglicht dabei in den unterschiedlichen Abschnitten eine unterschiedlich stark dosierte und damit kontrollierbarere Krafteinleitung in der Handhabung des Werkzeugs des medizinischen Instruments. Vorteilhafterweise weist das Griffstück des erfindungsgemäßen medizinischen Instruments wenigstens zwei oder mehr gegeneinander erfindungsgemäß elastisch verformbare Abschnitte auf. Dadurch wird vorteilhafterweise eine weitere Anpassung des Griffstücks an die Handhabung des jeweiligen Nutzers ermöglicht.

Der Erfindung liegt ferner die Erkenntnis zugrunde, dass durch den den Durchmesser des Abschnitts am freiliegenden Ende wulstartig vergrößernden Rand eine lösbar auf Zähnen, Zahnstümpfen und/oder Kieferimplantaten eines Ober- oder Unterkiefers angeordnete Prothese auf einfache, bequeme und weitestgehend verletzungsfreie Art und Weise beschädigungsfrei zu lösen ist. Durch den wulstartig vergrößerten Rand ist dabei insbesondere sichergestellt, dass das Zahnfleisch des Prothesenträgers beim Lösen der Prothese, insbesondere durch Abziehen der Prothese von den Zähnen, Zahnstümpfen und/oder Kieferimplantaten, nicht verletzt wird.

Beim Lösen kann der Prothesenträger selbst oder eine Fach-, Hilfs- und/oder Pflegeperson den den Durchmesser des Abschnitts am freiliegenden Ende des Kopfteils wulstartig vergrößernden Rand des erfindungsgemäßen medizinischen Instruments auf die vestibuläre und/oder buccale Wand einer Ober- oder Unterkieferprothese aufsetzen und das medizinische Instrument unter Kontakt zur Prothesenoberfläche zum Rand der Prothese in Richtung Zahnfleisch bzw. Ober-oder Unterkiefer gleiten. Wird der Rand der Prothese erreicht, rutscht der wulstartig vergrößerte Rand des erfindungsgemäßen medizinischen Instruments über den Rand der Prothese. In diesem Zustand kann die so gefasste Prothese durch entsprechende Abziehbewegung des medizinischen Instruments in Richtung weg vom Zahnfleisch bzw. Ober- oder Unterkiefer von den Zähnen, Zahnstümpfen und/oder Kieferimplantaten eines Ober- oder Unterkiefers, auf denen die Prothese lösbar angeordnet ist gelöst und entfernt werden.

Eine weitere Ausgestaltung der Erfindung sieht vor, dass die beiden Abschnitte des Griffstücks aus unterschiedlichen Materialien gefertigt sind. Erfindungsgemäß ist so durch Auswahl von Materialien unterschiedlicher elastischer Verformbarkeit eine Einstellung der Verformbarkeit durch Materialauswahl bewerkstelligbar. Gemäß einer weiteren Ausgestaltung der Erfindung weisen die beiden Abschnitte des Griffstücks unterschiedliche Materialstärken auf. Dadurch wird erfindungsgemäß eine weitere Einstellmöglichkeit der elastischen Verformbarkeit erzielbar.

Vorteilhafterweise weist der in Längserstreckungsrichtung des Schaftes liegende Abschnitt des Griffstücks eine den Schaft form- und/oder kraftschlüssig aufnehmende Aufnahme auf. Der Schaft bildet so eine Art Bewehrung für den in Längserstreckungsrichtung des Schaftes liegenden Abschnitt des Griffstücks und verleiht diesem so eine gegenüber dem das freiliegende Ende des Griffstücks ausbildenden Abschnitt des Griffstücks andere elastische Verformbarkeit. Darüber hinaus ist das erfindungsgemäße medizinische Instrument so besonders einfach und kostengünstig herstellbar, da ein entsprechendes vorzugsweise einteilig gefertigtes Griffstück mit einer Aufnahme für den Schaft in dem einen Abschnitt einfach auf den Schaft aufgesteckt und mit diesem verbunden wird. Die Verbindung erfolgt dabei vorteilhafterweise durch Form- und/oder Kraftschluss, mitunter durch zusätzliches Verkleben und/oder Verrasten des Griffstücks mit dem Schaft.

In einer vorteilhaften Ausgestaltung der Erfindung weist der wulstartige Rand des medizinischen Instruments einen im wesentlichen halbkreisförmigen Querschnitt auf. Gemäß einem vorteilhaften Vorschlag der Erfindung weist der halbkreisförmige Querschnitt einen Radius von etwa 0,25 mm bis etwa 1,00 mm auf.

In eine weiteren Ausgestaltung der Erfindung vergrößert sich der Durchmesser des Abschnitts des Kopfteils zum freien Ende des Abschnitts hin konisch. Dadurch ist insbesondere d e Stabilität des Abschnitts vergrößerbar und der wulstartige Rand besser an dem Abschnitt ausbildbar.

In einer weiteren vorteilhaften Ausgestaltung der Erfindung liegt der wulstartige Rand zumindest teilweise außerhalb der von dem Durchmesser des Griffstücks definierten Hüllebene. Der Erfindung liegt die Erkenntnis zugrunde, dass durch diese räumliche Anordnung des wulstartigen Randes des hakenartigen Kopfteils außerhalb der von dem Griffstück definierten Hüll- bzw. Greifebene die das erfindungsgemäße medizinische Instrument am Griffstück greifende Hand einer helfenden bzw. pflegenden Person beim Lösen bzw. Abziehen der einer Prothese aus dem unmittelbaren Gesichtsbereich der hilfe- bzw. pflegebedürftigen Person bringbar ist, so dass das Lösen bzw. Abziehen der Prothese sowohl für die hilfe- bzw. pflegebedürftige Person als auch die helfende bzw. pflegende Person insgesamt noch bequemer und einfacher erfolgen kann.

In einer bevorzugten Ausgestaltung der Erfindung ist der Abschnitt ein Schenkel von zwei im wesentlichen V-förmig zueinander angeordneten Schenkeln ist, wobei der den Abschnitt bildende Schenkel das frei liegende Ende des Kopfteils bereitstellt und der andere Schenkel am Schaft angeordnet ist. Die V-förmig zueinander angeordneten Schenkel ermöglichen insbesondere eine Zahnreihen des Ober- oder Unterkiefers übergreifende Anordnung des medizinischen Instruments zum Lösen bzw. Abziehen von Prothesen von der palatinalen oder lingualen Seite der Zahnreihen her. Vorteilhafterweise verläuft die zwischen der Spitze und der Öffnung des von den Schenkeln gebildeten V verlaufende, den zwischen den Schenkeln liegenden Winkel im wesentlichen halbierende Mittellinie im wesentlichen senkrecht zur Längserstreckungsrichtung des Schaftes.

Eine weitere vorteilhafte Ausgestaltung der Erfindung ist gekennzeichnet durch ein über das Kopfteil steckbares Deckelelement. Das vorzugsweise als Verschlusskappe ausgebildete Deckelelement ermöglicht vorteilhafterweise einen Schutz des hakenartigen Kopfteils des erfindungsgemäßen Instruments vor Beschädigungen und/oder Verschmutzungen im aufgebrachten Zustand. Vorteilhafterweise ist das Deckelelement auf und/oder an dem Griffstück befestigbar, vorzugsweise durch Aufstecken oder Aufschrauben.

Zur weiteren Verbesserung der Handhabung, insbesondere hinsichtlich ergonomischer Gesichtspunkte, ist das Griffstück des erfindungsgemäßen medizinischen Instruments im Querschnitt vorteilhafterweise ovalförmig ausgebildet ist. Eine weitere Ausgestaltung der Erfindung sieht vor, dass das Griffstück des erfindungsgemäßen medizinischen Instruments Erhöhungen und/oder Vertiefungen aufweist. Vorteilhafterweise sind die Erhöhungen und/oder Vertiefungen durch Einsätze oder Auflagen aus einem rutschfesten Material, vorzugsweise Gummi. Silikon und/oder Kautschuk, ausgebildet. Durch diese Maßnahmen - einzeln und/oder in Kombination miteinander - ist das erfindungsgemäße medizinische Instrument ermüdungsfreier und insgesamt sicherer handhabbar.

Weiter wird mit der vorliegenden Erfindung zur technischen Lösung der Aufgabe ein System bestehend aus einer lösbar auf Zähnen, Zahnstümpfen und/oder Kieferimplantaten eines Ober- oder Unterkiefers anordbaren Prothese und einem erfindungsgemäßen medizinisches Instrument vorgeschlagen, wobei die Prothese wenigstens einen mit dem den Durchmesser des Abschnitts am freiliegenden Ende des Kopfteils des medizinischen Instruments wulstartig vergrößernden Rand zusammenwirkenden kragenartigen Rand aufweist. Durch den mit dem wulstartigen Rand des medizinischen Instruments zusammenwirkenden kragenartigen Rand der Prothese ist ein optimal aufeinander abgestimmtes System von Prothese und medizinischem Instrument bereitgestellt, welches in optimaler Art und Weise ein noch einfacheres, bequemeres, verletzungs- und beschädigungsfreies Lösen der Prothese von den Zähnen, Zahnstümpfen und/oder Kieferimplantaten eines Ober- oder Unterkiefers ermöglicht.

In einer weiteren Ausgestaltung des erfindungsgemäßen Systems ist der kragenartige Rand durch die vestibuläre und/oder buccale Wand einer Ober- oder Unterkieferprothese gebildet.

Vorteilhafterweise weist der kragenartige Rand der Prothese wenigstens eine mit dem wulstartigen Rand des medizinischen Instruments zusammenwirkende kerbenartige Aufnahme auf. In einer weiteren vorteilhaften Ausgestaltung der Erfindung kann der wulstartige Rand des medizinischen Instruments in die kerbenartige Aufnahme der Prothese wenigstens teilweise eingreifen. Durch diese erfindungsgemäßen Ausgestaltungen ist die Handhabbarkeit des Systems weiter verbesserbar.

Weitere Einzelheiten, Merkmale und Vorteile der Erfindung werden nachfolgend anhand des in den Figuren der Zeichnung dargestellten Ausführungsbeispiels näher erläutert. Dabei zeigen:

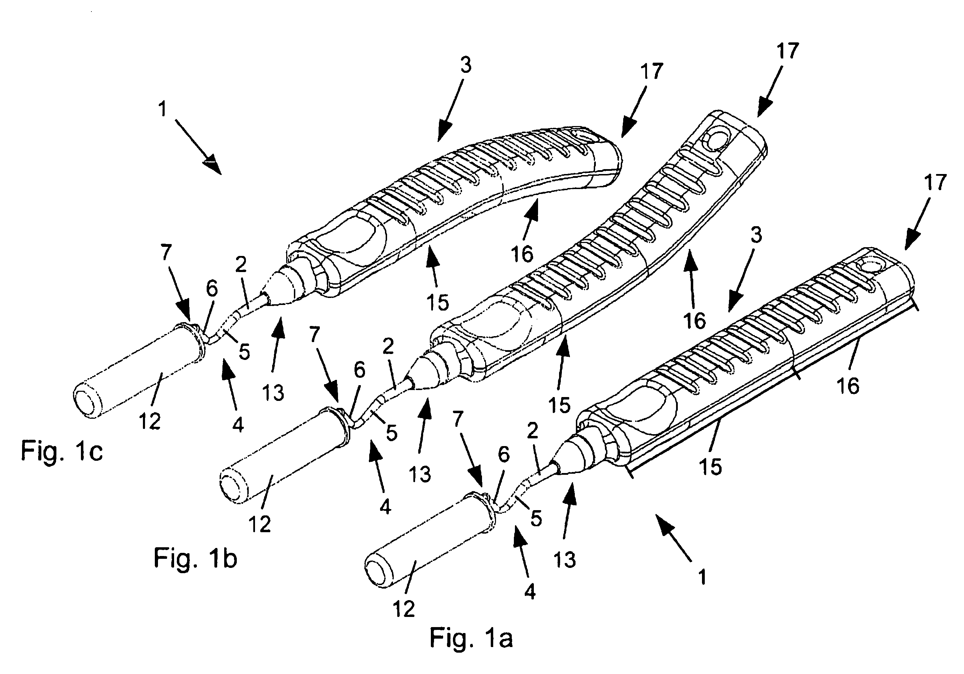

- Fig. 1a: in einer schematisch perspektivischen Ansicht ein Ausführungsbeispiel eines erfindungsgemäßen medizinischen Instruments zum Lösen einer lösbar auf Zähnen, Zahnstümpfen und/oder Kieferimplantaten eines Ober- oder Unterkiefers angeordneten Prothese;
- Fig. 1b: in einer schematisch perspektivischen Ansicht das medizinische Instrument gemäß Fig. 1a mit elastisch verformbarem Griffstück in einer ersten verformten Position;
- Fig. 1 c: in einer schematisch perspektivischen Ansicht das medizinische Instrument gemäß Fig. 1 a mit elastisch verformbaren Griffstück in einer zweiten verformten Position;
- Fig. 2: eine schematische Längsseitenansicht des medizinischen Instruments Fig. 1a, Fig. 1b beziehungsweise Fig. 1c;
- Fig. 3: eine schematische Draufsicht auf das medizinische Instrument gemäß Fig. 1a;
- Fig. 4: eine geschnittene Ansicht des medizinischen Instruments gemäß der Schnittlinie A-A nach Fig. 3;
- Fig. 5: eine Frontansicht des distalen Endes des medizinischen Instruments gemäß Fig. 1 und
- Fig. 6: im Detail eine schematische Längsseitenansicht des distalen Endes des medizinischen Instruments nach Fig. 1.

Das in den Figuren dargestellte medizinische Instrument 1 ist vorliegend aus Metall und/oder Kunststoff mit einem Schaft 2, an dessen proximalem Ende ein Griffstück 3 und an dessen distalem Ende ein hakenartiges Kopfteil 4 ausgebildet ist, gefertigt.

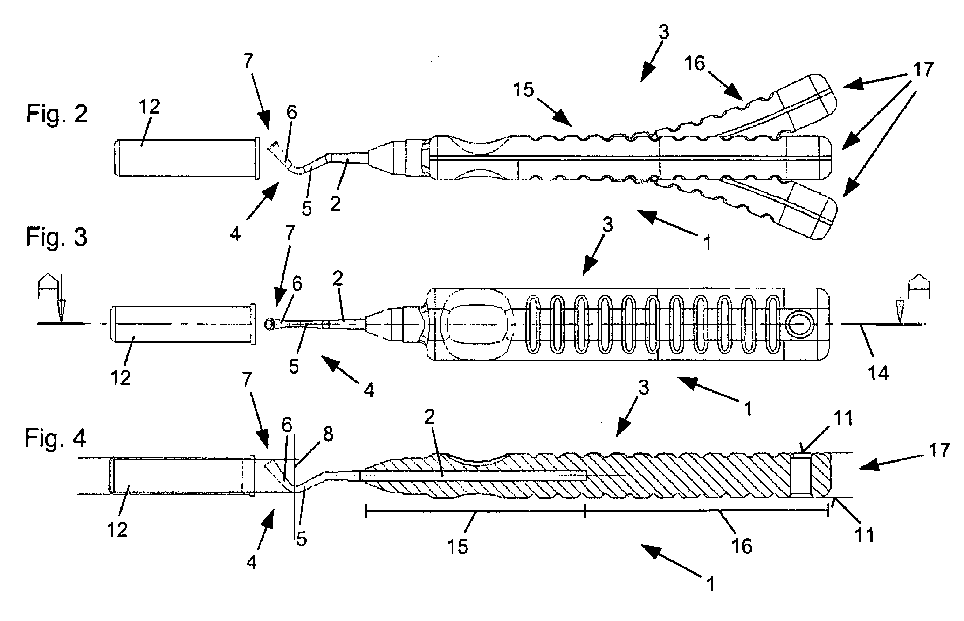

Das Griffstück 3 weist einen in Längserstreckungsrichtung 14 des Schaftes 2 liegenden Abschnitt 15 und einen ein freiliegendes Ende 17 des Griffstücks 3 ausbildenden Abschnitt 16 auf. Der das freiliegende Ende 17 des Griffstücks 3 ausbildende Abschnitt 16 des Griffstücks 3 ist gegenüber dem in Längserstreckungsrichtung 14 des Schaftes 2 liegenden Abschnitt 15 des Griffstücks 3 in Richtung zumindest einer im wesentlichen horizontal senkrecht zur Längserstreckungsrichtung 14 des Schaftes 2 verlaufenden Achse elastisch verformbar, wie in Fig. 1b, Fig. 1c und Fig. 2 dargestellt.

Der Schaft 2 erstreckt sich vorliegend in den in Längserstreckungsrichtung 14 des Schaftes 2 liegenden Abschnitt 15 des Griffstücks bis zu dem ein freiliegendes Ende 17 des Griffstücks 3 ausbildenden Abschnitt 16 des Griffstücks 3. Der Schaft 2 wird dabei von dem in Längserstreckungsrichtung 14 des Schaftes 2 liegenden Abschnitt 15 des Griffstücks 3 im wesentlichen form- und/oder kraftschlüssig aufgenommen. Dazu weist der Abschnitt 16 des Griffstücks 3 eine entsprechend korrespondierend ausgebildete Aufnahme für den Schaft 2 auf. Der Schaft bildet so eine Art Bewehrung für den in Längserstreckungsrichtung 14 des Schaftes 2 liegenden Abschnitt 15 des Griffstücks 3 und verleiht dem Abschnitt 15 so eine gegenüber dem das freiliegende Ende 17 des Griffstücks 3 ausbildenden Abschnitt 16 des Griffstücks 3 andere elastische Verformbarkeit. Im Rahmen der Fertigung des medizinischen Instruments 1 wird das vorzugsweise einteilig gefertigte Griffstück 3 mit der Aufnahme für den Schaft 2 in dem Abschnitt 15 einfach auf den Schaft aufgesteckt und mit diesem verbunden. Die Verbindung erfolgt dabei durch Form- und/oder Kraftschluss, mitunter durch zusätzliches Verkleben und/oder Verrasten des Griffstücks 3 in dem Abschnitt 15 mit dem aufgenommenen Schaft 2.

Die Handhabung des medizinischen Instruments 1 ist im Hinblick auf eine kontrollierte und/oder dosierbare Krafteinleitung als auch eine kontrollierte Führung des medizinischen Instruments 1 durch die gegeneinander elastisch verformbaren Abschnitte 15 und 16 seitens des Griffstücks 3 gegenüber ansonsten bekannten medizinischen Instrumenten mit einem starren Griffstück verbessert. Die erfindungsgemäße elastische Verformbarkeit ermöglicht dabei in den unterschiedlichen Abschnitten 15 und 16 eine unterschiedlich stark dosierte und damit kontrollierbarere Krafteinleitung in der Handhabung des Werkzeugs des medizinischen Instruments 1.

Das Kopfteil 4 des medizinischen Instruments 1 ist vorliegend von zwei V-förmig zueinander angeordneten Schenkeln 5 und 6 ausgebildet. Der Schenkel 5 ist am Schaft 2 angeordnet. Der sich an den Schenkel 5 anschließende Schenkel 6 stellt ein freiliegendes Ende 7 des Kopfteils 4 bereit. Dabei verläuft vorliegend die zwischen der Spitze und der Öffnung des von den Schenkeln 5 und 6 gebildeten V verlaufende, den zwischen den Schenkeln 5 und 6 des V liegenden Winkel a halbierende Mittellinie 8 senkrecht zur Längserstreckungsrichtung 14 des Schaftes 2.

Das freiliegende Ende 7 weist vorliegend einen gegenüber dem sich zum freien Ende 7 hin konisch vergrößernden Durchmesser des Schenkels 6 einen wulstartig vergrößerten Rand 9 mit einem halbkreisförmigen Querschnitt mit einem Radius von etwa 0,3 mm auf. Der wulstartige Rand 9 liegt - wie anhand von Fig. 4 ersichtlich - vorliegend innerhalb der von dem Durchmesser des Griffstücks 3 definierten Hüll- bzw. Greifebene 11.

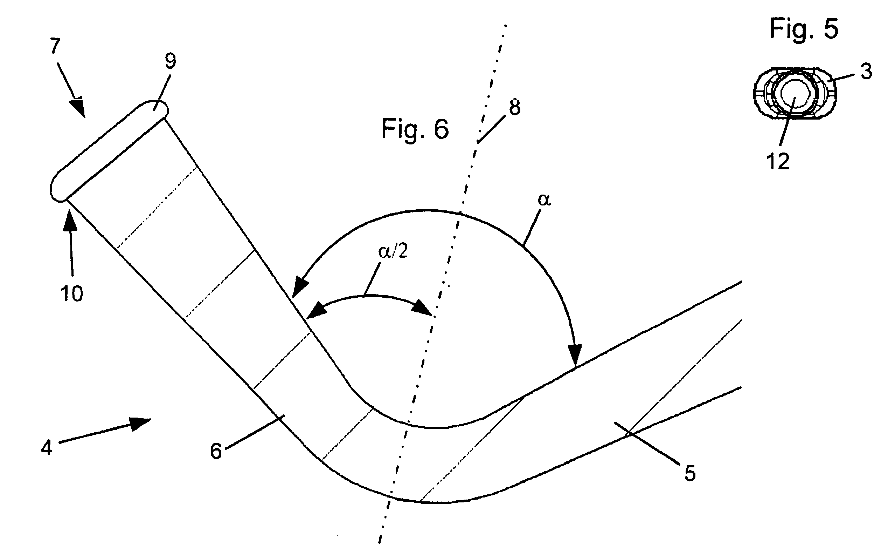

Weiter weist das medizinisches Instrument 1 ein über das Kopfteil 4 steckbares Deckelelement 12 auf, welches vorliegend auf durch Aufstecken auf einen sich konisch verjüngenden Befestigungsabschnitt 13 des Griffstücks 3 an dem Griffstück 3 befestigbar ist. Das Griffstück 3 des medizinischen Instruments 1 ist vorliegend im Querschnitt im ovalförmig ausgebildet, wie insbesondere anhand von Fig. 5 erkennbar ist. Weiter weist das Griffstück 3 Erhöhungen und/oder Vertiefungen zur besseren Greifbarkeit desselben auf.

Das in den Figuren der Zeichnung dargestellte Ausführungsbeispiel der Erfindung dient lediglich der Erläuterung der Erfindung und ist für diese nicht beschränkend.

### Bezugszeichenliste:

- 1: medizinisches Instrument
- 2: Schaft
- 3: Griffstück
- 4: Kopfteil
- 5: Schenkel
- 6: Abschnitt/Schenkel
- 7: freies Ende (Abschnitt/Schenkel (6)
- 8: Mittellinie
- 9: wulstartiger Rand (freies Ende (7))
- 10: Abrundung
- 11: Hüllebene
- 12: Deckelelement/Verschlusskappe
- 13: Befestigungsabschnitt (Griffstück (3))
- 14: Längserstreckungsrichtung
- 15: Abschnitt (Griff stück (3))
- 16: Abschnitt (Griffstück (3))
- 17: freies Ende (Abschnitt (16) (Griffstück (3)))
- a: Winkel

## Patentansprüche

1. Medizinisches Instrument (1) zum Lösen einer lösbar auf Zähnen, Zahnstümpfen und/oder Kieferimplantaten eines Ober- oder Unterkiefers angeordneten Prothese,
mit
einem Schaft (2),
an dessen proximalem Ende ein Griffstück (3) und
an dessen distalem Ende ein hakenartig ausgebildetes Kopfteil (4) angeordnet ist,
wobei
das Kopfteil (4)
einen gegenüber dem Schaft (2) abgewinkelten Abschnitt (6) aufweist, welcher ein freiliegendes Ende (7) des Kopfteils (4) bereitstellt,
und
der Abschnitt (6) des Kopfteils (4)
an dem freiliegenden Ende (7)
einen den Durchmesser des Abschnitts (6) am freiliegenden Ende (7) wulstartig vergrößernden Rand (9) aufweist, wobei
das Griffstück (3)
einen in Längserstreckungsrichtung (14) des Schaftes (2) liegenden Abschnitt (15) und
einen ein freiliegendes Ende (16) des Griffstücks (3) ausbildenden Abschnitt (17) aufweist,
wobei
der das freiliegende Ende (16) des Griffstücks (3) ausbildende Abschnitt (17) des Griffstücks (3)
gegenüber dem in Längserstreckungsrichtung (14) des Schaftes (2) liegenden Abschnitt (15) des Griffstücks (3)
in Richtung zumindest einer im wesentlichen senkrecht zur Längserstreckungsrichtung (14) des Schaftes (2) verlaufenden Achse (18) elastisch verformbar ist, **dadurch gekennzeichnet, dass** sich der Schaft (2) in den in Längserstreckungsrichtung (14) des Schaftes (2) liegenden Abschnitt (15) des Griffstücks (3) erstreckt.

2. Medizinisches Instrument nach Anspruch 1, **dadurch gekennzeichnet, dass** das freiliegende Ende (7) des Kopfteils (4) ein Werkzeug (9) bereitstellt.

3. Medizinisches Instrument (1) nach Anspruch 1 oder Anspruch 2, **dadurch gekennzeichnet, dass** die beiden Abschnitte (15, 17) des Griffstücks (3) aus unterschiedlichen Materialien gefertigt sind.

4. Medizinisches Instrument (1) nach einem der Ansprüche 1 bis 3, **dadurch gekennzeichnet, dass** die beiden Abschnitte (15, 17) des Griffstücks (3) unterschiedliche Materialstärken aufweisen.

5. Medizinisches Instrument (1) nach einem der Ansprüche 1 bis 4, **dadurch gekennzeichnet, dass** der wulstartige Rand (9) einen im wesentlichen halbkreisförmigen Querschnitt aufweist.

6. Medizinisches Instrument (1) nach Anspruch 5, **dadurch gekennzeichnet, dass** der halbkreisförmige Querschnitt einen Radius von etwa 0,25 mm bis etwa 1,00 mm aufweist.

7. Medizinisches Instrument (1) nach einem der Ansprüche 1 bis 6, **dadurch gekennzeichnet, dass** sich der Durchmesser des Abschnitts (6) des Kopfteils (4) zum freien Ende (7) des Abschnitts (6) hin konisch vergrößert.

8. Medizinisches Instrument (1) nach einem der Ansprüche 1 bis 7, **dadurch gekennzeichnet, dass** der wulstartige Rand (9) zumindest teilweise außerhalb der von dem Durchmesser des Griffstücks (3) definierten Hüllebene (11) liegt.

9. Medizinisches Instrument (1) nach einem der Ansprüche 1 bis 8, **dadurch gekennzeichnet, dass** der Abschnitt (6) ein Schenkel (6) von zwei im wesentlichen V-förmig zueinander angeordneten Schenkeln (5, 6) ist, wobei der den Abschnitt (6) bildende Schenkel (6) das freiliegende Ende (7) des Kopfteils (4) bereitstellt und der andere Schenkel (5) am Schaft (2) angeordnet ist.

10. Medizinisches Instrument (1) nach Anspruch 9, **dadurch gekennzeichnet, dass** die zwischen der Spitze und der Öffnung des von den Schenkeln (5, 6) gebildeten V verlaufende, den zwischen den Schenkeln (5, 6) liegenden Winkel (a) im wesentlichen halbierende Mittellinie (8) im wesentlichen senkrecht zur Längserstreckungsrichtung (14) des Schaftes (2) verläuft.

11. Medizinisches Instrument (1) nach einem der Ansprüche 1 bis 10, **gekennzeichnet durch** ein über das Kopfteil (4) steckbares Deckelelement (12).

12. Medizinisches Instrument (1) nach Anspruch 11, **dadurch gekennzeichnet, dass** das Deckelelement (12) auf und/oder an dem Griffstück (3) befestigbar ist, vorzugsweise durch Aufstecken und/oder Aufschrauben.

13. Medizinisches Instrument (1) nach einem der Ansprüche 1 bis 12, **dadurch gekennzeichnet, dass** das Griffstück (3) im Querschnitt im wesentlichen ovalfärmig ausgebildet ist.

14. Medizinisches Instrument (1) nach einem der Ansprüche 1 bis 13, **dadurch gekennzeichnet, dass** das Griffstück (3) über in Längserstreckungsrichtung verteilt Erhöhungen und/oder Vertiefungen aufweist.

15. Medizinisches Instrument (1) nach Anspruch 14, **dadurch gekennzeichnet, dass** die Erhöhungen und/oder Vertiefungen durch Einsätze oder Auflagen aus einem rutschfesten Material, vorzugsweise Gummi, Silikon und/oder Kautschuk, ausgebildet sind.

16. System bestehend aus einer lösbar auf Zähnen, Zahnstümpfen und/oder Kieferimplantaten eines Ober- oder Unterkiefers anordbaren Prothese und einem medizinisches Instrument (1) nach einem der Ansprüche 1 bis 15, **dadurch gekennzeichnet, dass** die Prothese wenigstens einen mit dem den Durchmesser des Abschnitts (6) am frei liegenden Ende (7) des Kopfteils (4) des medizinischen Instruments (1) wulstartig vergrößernden Rand (9) zusammenwirkenden kragenartigen Rand aufweist.

17. System nach Anspruch 16, **dadurch gekennzeichnet, dass** der kragenartige Rand durch die vestibuläre und/oder buccale Wand einer Ober- oder Unterkieferprothese gebildet ist.

18. System nach Anspruch 16 oder Anspruch 17, **dadurch gekennzeichnet, dass** der kragenartige Rand der Prothese wenigstens eine mit dem wulstartigen Rand (9) des medizinischen Instruments (1) zusammenwirkende kerbenartige Aufnahme aufweist.

19. System nach Anspruch 18, **dadurch gekennzeichnet, dass** der wulstartige Rand (9) des medizinischen Instruments (1) in die kerbenartige Aufnahme der Prothese wenigstens teilweise eingreifen und/oder die kerbenartige Aufnahme der Prothese wenigstens teilweise hintergreifen kann.

## Claims

1. A medical instrument (1) for loosening a prosthesis which is detachably affixed on teeth, tooth stumps and/or jawbone implants of an upper or lower jawbone,
comprising
a shaft (2),
at the proximal end of which a handle piece (3) is arranged and
at the distal end of which a hook-like head section (4) is arranged,
wherein
the head section (4)
comprises a section (6) which is angled with respect to the shaft (2),
which section (6) provides a free end (7) of the head section (4),
and
the section (6) of the head section (4)
comprises, at the free end (7),
a rim (9) which enlarges the diameter of the section (6) at the free end (7) like a bulge, wherein
the handle piece (3)
comprises a section (15) extending in the direction of the longitudinal extension (14) of the shaft (2) and
a section (17) which forms a free end (16) of the handle piece (3),
wherein
the section (17) of the handle piece (3), which forms the free end (16) of the handle piece (3)
can be elastically deformed with respect to the section (15) of the handle piece (3) extending in the direction of the longitudinal extension (14) of the shaft (2)
in the direction of an axis which extends at least essentially perpendicularly to the direction of the longitudinal extension (14) of the shaft (2), **characterized in that**
the shaft (2) extends into the section (15) of the handle piece (3) extending in the direction of the longitudinal extension (14) of the shaft (2).

2. A medical instrument according to claim 1, **characterized in that** the free end (7) of the head section (4) provides a tool (9).

3. A medical instrument (1) according to claim 1 or claim 2, **characterized in that** the two sections (15, 17) of the handle piece (3) are made of different materials.

4. A medical instrument (1) according to one of the claims 1 to 3, **characterized in that** the two sections (15, 17) of the handle piece (3) comprise different material thicknesses.

5. A medical instrument (1) according to one of the claims 1 to 4, **characterized in that** the bulge-like rim (9) comprises an essentially semicircular cross section.

6. A medical instrument (1) according to claim 5, **characterized in that** the semicircular cross section comprises a radius comprised between approximately 0.25 mm and approximately 1.00 mm.

7. A medical instrument (1) according to one of the claims 1 to 6, **characterized in that** the diameter of the section (6) of the head section (4) increases conically towards the free end (7) of the section (6).

8. A medical instrument (1) according to one of the claims 1 to 7, **characterized in that** the bulge-like rim (9) is at least partially placed outside the shell plane (11) defined by the diameter of the handle piece (3).

9. A medical instrument (1) according to one of the claims 1 to 8, **characterized in that** the section (6) is one leg (6) of two legs (5, 6) which are essentially arranged in a V-shape with respect to each other, wherein the leg (6) which forms the section (6) provides the free end (7) of the head section (4) and the other leg (5) is arranged on the shaft (2).

10. A medical instrument (1) according to claim 9, **characterized in that** the center line (8) which extends between the tip and the opening of the V formed by the legs (5, 6) and essentially bisects the angle (α) formed between the legs (5, 6) essentially extends perpendicularly to the longitudinal extension (14) of the shaft (2).

11. A medical instrument (1) according to one of the claims 1 to 10, **characterized by** a cover element (12) which can be slipped over the head section (4).

12. A medical instrument (1) according to claim 11, **characterized in that** the cover element (12) can be attached on and/or to the handle piece (3), preferably by plugging and/or screwing it onto the handle piece (3).

13. A medical instrument (1) according to one of the claims 1 to 12, **characterized in that** the cross section of the handle piece (3) is essentially oval-shaped.

14. A medical instrument (1) according to one of the claims 1 to 13, **characterized in that** the handle piece (3) comprises elevations and/or dents distributed over the longitudinal extension.

15. A medical instrument (1) according to claim 14, **characterized in that** the elevations and/or dents are formed by inserts or laid-on elements made of a non-slip material, preferably rubber, silicone and/or caoutchouc.

16. A system composed of a prosthesis, which can be detachably affixed on teeth, tooth stumps and/or jawbone implants of an upper or lower jawbone, and of a medical instrument (1) according to one of the claims 1 to 15, **characterized in that** the prosthesis at least comprises one collar-like rim which cooperates with the rim (9) which enlarges the diameter of the section (6) placed at the free end (7) of the head section (4) of the medical instrument (1) in a bulging manner.

17. A system according to claim 16, **characterized in that** the collar-like rim is formed by the vestibular and/or buccal wall of an upper or lower jawbone prosthesis.

18. A system according to claim 16 or claim 17, **characterized in that** the collar-like rim of the prosthesis at least comprises one notch-like receiver which cooperates with the bulge-like rim (9) of the medical instrument (1).

19. A system according to claim 18, **characterized in that** the bulge-like rim (9) of the medical instrument (1) can at least partially engage in and/or behind the notch-like receiver of the prosthesis.

## Revendications

1. Instrument médical (1) destiné à détacher une prothèse disposée de manière amovible sur des dents, des chicots de dent et/ou des implants de mâchoire d'une mâchoire supérieure ou inférieure,
comprenant
une tige (2),
à l'extrémité proximale de laquelle est disposée une poignée et
à l'extrémité distale de laquelle est disposée une tête (4) configurée comme un crochet,
dans lequel
la tête (4)
comprend une section (6) coudée par rapport à la tige (2),
laquelle section (6) fournit une extrémité libre (7) de la tête (4),
et
la section (6) de la tête (4)
comprend, à l'extrémité libre (7),
un rebord (9) qui augmente le diamètre de la section (6) à l'extrémité libre (7) en formant un bourrelet, dans lequel
la poignée (3)
comprend une section (15) s'étendant dans la direction de l'extension longitudinale (14) de la tige (2) et
une section (17) qui forme une extrémité libre (16) de la poignée (3),
dans lequel
la section (17) de la poignée (3) formant l'extrémité libre (16) de la poignée (3)
est susceptible d'être déformée élastiquement dans la direction d'au moins un axe qui s'étend essentiellement de façon perpendiculaire à la direction de l'extension longitudinale (14) de la tige (2)
par rapport à la section (15) de la poignée (3) s'étendant dans la direction de l'extension longitudinale (14) de la tige (2), **caractérisé en ce que** la tige (2) s'étend dans la section (15) de la poignée (3) s'étendant dans la direction de l'extension longitudinale (14) de la tige (2).

2. Instrument médical selon la revendication 1, **caractérisé en ce que** l'extrémité libre (7) de la tête (4) fournit un outil (9).

3. Instrument médical (1) selon la revendication 1 ou la revendication 2, **caractérisé en ce que** les deux sections (15, 17) de la poignée (3) sont fabriquées en matériaux différents.

4. Instrument médical (1) selon l'une des revendications 1 à 3, **caractérisé en ce que** les deux sections (15, 17) de la poignée (3) comprennent des épaisseurs de matériau différentes.

5. Instrument médical (1) selon l'une des revendications 1 à 4, **caractérisé en ce que** le rebord (9) sous forme de bourrelet comprend une section transversale essentiellement en forme semi-circulaire.

6. Instrument médical (1) selon la revendication 5, **caractérisé en ce que** la section transversale semi-circulaire comprend un rayon compris entre environ 0,25 mm et environ 1,00 mm.

7. Instrument médical (1) selon l'une des revendications 1 à 6, **caractérisé en ce que** le diamètre de la section (6) de la tête (4) augmente de manière conique vers l'extrémité libre (7) de la section (6).

8. Instrument médical (1) selon l'une des revendications 1 à 7, **caractérisé en ce que** le rebord (9) sous forme de bourrelet se trouve au moins partiellement à l'extérieur du plan d'enveloppe (11) défini par le diamètre de la poignée (3).

9. Instrument médical (1) selon l'une des revendications 1 à 8, **caractérisé en ce que** la section (6) est une branche (6) de deux branches (5, 6) disposées essentiellement en forme de V l'une par rapport à l'autre, la branche (6) formant la section (6) fournissant l'extrémité libre (7) de la tête (4) et l'autre branche (5) étant disposé sur la tige (2).

10. Instrument médical (1) selon la revendication 9, **caractérisé en ce que** la ligne médiane (8), qui s'étend entre la pointe et l'ouverture du V formé par les branches (5, 6) et qui essentiellement divise en deux l'angle (α) inclus entre les branches (5, 6), s'étend essentiellement de manière perpendiculaire par rapport à la direction de l'extension longitudinale (14) de la tige (2).

11. Instrument médical (1) selon l'une des revendications 1 à 10, **caractérisé par** un élément de couvercle (12) susceptible d'être enfiché sur la tête (4).

12. Instrument médical (1) selon la revendication 11, **caractérisé en ce que** l'élément de couvercle (12) est susceptible d'être fixé sur et/ou à la poignée (3), de préférence par enfichage et/ou par vissage.

13. Instrument médical (1) selon l'une des revendications 1 à 12, **caractérisé en ce que** la section transversale de la poignée (3) a essentiellement une forme ovale.

14. Instrument médical (1) selon l'une des revendications 1 à 13, **caractérisé en ce que** la poignée (3) comprend des élévations et/ou des cavités qui sont répandues sur l'extension longitudinale.

15. Instrument médical (1) selon la revendication 14, **caractérisé en ce que** les élévations et/ou les cavités sont formées par des éléments insérés ou appliqués et fabriqués en un matériau antidérapant, de préférence en gomme, en silicone et/ou en caoutchouc.

16. Système composé d'une prothèse susceptible d'être disposée de manière amovible sur des dents, des chicots de dent et/ou des implants de mâchoire d'une mâchoire supérieure ou inférieure et d'un instrument médical (1) selon l'une des revendications 1 à 15, **caractérisé en ce que** la prothèse comprend au moins un bord en forme de collerette qui coopère avec le rebord (9) en forme de bourrelet, qui augmente le diamètre de la section (6) à l'extrémité libre (7) de la tête de l'instrument médical.

17. Système selon la revendication 16, **caractérisé en ce que** le bord en forme de collerette est formé par la paroi vestibulaire et/ou buccale d'une prothèse de mâchoire supérieure ou inférieure.

18. Système selon la revendication 16 ou la revendication 17, **caractérisé en ce que** le bord en forme de collerette de la prothèse comprend au moins un logement en forme d'encoche qui coopère avec le rebord (9) en forme de bourrelet de l'instrument médical (1).

19. Système selon la revendication 18, **caractérisé en ce que** le rebord (9) en forme de bourrelet de l'instrument médical (1) peut au moins partiellement s'engrener dans le logement en forme d'encoche de la prothèse et/ou peut au moins partiellement venir en prise derrière le logement en forme d'encoche de la prothèse.
